Europäisches Patentamt

European Patent Office

Office européen des brevets

(11) Veröffentlichungsnummer: **0 446 478 A1**

## (12) EUROPÄISCHE PATENTANMELDUNG

(21) Anmeldenummer: 90125311.2

(22) Anmeldetag: 22.12.90

(51) Int. Cl.⁵: **F24C** 1/16, A47J 36/26

Die Bezugnahmen auf die Zeichnungen (Abb. 1 + 2) gelten als gestrichen (Regel 43 EPÜ).

(30) Priorität: **24.12.89 DE 3942530**

(43) Veröffentlichungstag der Anmeldung:
**18.09.91 Patentblatt 91/38**

(84) Benannte Vertragsstaaten:
**AT CH DE FR GB LI**

(71) Anmelder: **Thiemann, Gerhard**
**Heerstrasse 40**
**W-7141 Murr(DE)**

(72) Erfinder: **Thiemann, Gerhard**
**Heerstrasse 40**
**W-7141 Murr(DE)**

(54) **Konservenwärmegerät mit geringer Bauhöhe.**

(57) Es ist ein Konservenwärmegerät mit stufenlos regulierbarer Luftzufuhr und geringer Bauhöhe vorgeschlagen, welches zum Ausgleich eines anhebbaren oder umgekehrt an den Unterkanten eines Brenners rund um verstellbaren Luftspalts, einen auf Auflaufstiften am Innenumfang eines Brenners angeordneten inneren Ringständer aufweist und auf dem eine Befestigungsvorrichtung mit einem Brennstoffbehälter angeordnet ist.

EP 0 446 478 A1

Die Erfindung betrifft ein Konservenwärmegerät mit geringer Bauhöhe, welches aus einem becherförmigen Brenner mit einer weitgehendst groß angelegten Flammöffnung und einem auf dessen Innenumfang angeordneten inneren Ringständer und einem auf dessen Außenumfang angeordneten äußeren Ringständer besteht, und einem mit einer auf dem inneren Ringständer angeordneten und mit den Unterkanten über einen Brennstoffbehälter greifenden Befestigungsvorrichtung, welche im Deckenabschnitt vorzugsweise mehrere aus dem Material nach oben gedrückte und in symetrischer Reihenfolge einander abwechselnde Luftleiterhöhungen, und eine mittige Flammöffnung aufweist, und die Luftleiterhöhungen mit denen im Deckenabschnitt des Brenners identisch ausgebildeten Luftleiterhöhungen derart zusammenwirken, daß sie infolge einer Verdrehung des Brenners und/oder inneren Ringständers, miteinander eine flächenschlüssige Endstellung einnehmen,

Derartige Warmhaltegeräte sind bekannt (beispielsweise DE 29 36 595 und DE-GM 7317609),

Diese Art von Warmhaltegeräte weisen alle einen Nachteil auf, welcher seinen Ausdruck in der Regelung der Luftzufuhr und Anordnung der Luftspalte findet,

Bei diesen Warmhaltegeräten handelt es sich um Ausführungen mit konstant und/oder regulierbar angeordneten Luftspalten, deren Eingänge an den Oberkanten der Brenner, bzw. zwischen den Kanten von zwei Brennerteilen liegen, und entweder im Brenner gekrümmt ausgebildet sind, oder mittels eines anhebbaren Brenneroberteils zum Ausgleich der Luftspaltbreite, rund um offen auf die Brennstoffstellen der dementsprechenden Warmhaltevorrichtungen ausgerichtet sind und dadurch, für die Anwendung im Freien nur bedingt geeignet sind, weil die Flamme durch die Anordnung der Luftspalte, bereits durch die Turbulenzen von schwach auftretenden Windböen erlöschen kann, oder auf dem Weg zum Gefäß zwischen Bennerunterteil und Brenneroberteil nutzlos verweht,

Die Aufgabe der Erfindung besteht darin, ein Konservenwärmegerät zu schaffen, welches eine geringe Bauhöhe hat und bei dem die Verstellvorrichtung, in der Gestalt eines inneren Ringständers, konstruktiv einfach ist und ein leichtgängiges stufenloses Anheben des Brenners zum Ausgleich der Luftspaltbreite unterhalb dessen Endkanten, problemlos ermöglicht, wobei der innere Ringständer auf dem Innenumfang des Brenners angeordnet ist und über den Verstellweg von Auflaufschrägen, stufenlos anhebbar oder umgekehrt einsetzbar ist, und darüberhinaus auf dem Außenumfang des Brenners eine zweite Verstellvorrichtung, in der Gestalt eines äußeren Ringständers, angeordnet ist, welcher im Prinzip den gleichen Aufbau des inneren Ringständers aufweist und den Abstand des Gefäßes zum Brenner, bzw. zur Flamme des Brenners, stufenlos anhebbar oder umgekehrt regelt,

Diese Aufgabe wird durch die in Anspruch 1 angegebenen Merkmale gelöst. Die Unteransprüche zeigen vorteilhafte Ausgestaltungen des Erfindungsgegenstandes auf und sind nachfolgend anhand eines in der Zeichnung dargestellten Ausführungsbeispiels der Erfindung beschrieben. Dabei zeigen:

Fig. 1  das Erfindungsprinzip anhand einer schematischen dargestellten Konservenwärmegeräte-Anordnung von der Seite im Schnitt und

Fig. 2  die prinzipielle Anordnung der Luftleiterhöhungen mit den danebenliegenden Luftleitvertiefungen in der Draufsicht,

Mit 1 ist ein innerer Ringständer zum Anheben und zum Ausgleich eines ringförmigen Luftspalts (Pfeilrichtung) bezeichnet. Der innere Ringständer 1 ist ein Teil eines Brenners 5, welcher lediglich schematisch dargestellt ist. Die an den Streben im mittigen Bereich des inneren Ringständers 1 angeordneten Brennstofflageflächen 2, sind zum Auflegen von Brennstofftabletten bestimmt, wobei die Streben auch eine Auflagefläche, z.B. in der Form eines flachen Gitters, für den festen Stand der Befestigungsvorrichtung 8 und dem des Brennstoffbehälters 7 zuständig sind.

Die Wellungen 3 an den Ringen des inneren Ringständers 1 sind nach innen geformt und symetrisch angeordnet, wobei sie jeweils im Bereich zwischen zwei benachbarten und in wenigen Winkelgraden am Außenumfang des inneren Ringständers 1 ansteigenden Auflaufstiften 4 angeordnet sind. Den Auflaufstiften 4 gegenüber sind Auflaufstifte 6 am Innenumfang des Brenners 5 angebracht, welche mit denen am inneren Ringständer angeordneten Auflaufstiften 4 derart zusammenwirken, daß sie durch Verdrehen des Brenners 5 und/oder des inneren Ringständers 1, im Sinne eines gewindemäßigen Bewegungsablaufs gegeneinander verstellbar sind und dabei Reibung aufeinander ausüben,

Der Anstellwinkel der Auflaufstifte 4 und 6 ist vorteilhaft so gewählt, daß die Reibung zwischen den betreffenden Teilen ausreicht um die gewählte Endstellung, entsprechend den Erfordernissen beizubehalten,

Bei einem Brenner 1 mit einem an dessen Unterkanten stufenlos anhebbaren Luftspalts, ist ein kaminartiger Strömungsweg zur Brennstoffstelle gegeben. Die einströmende Luft wird dabei einerseits durch den innenseitigen Kanal des doppelkanäligen Luftspalts 10, unmittelbar zur Brennstoffstelle geleitet und und andererseits, durch den außenseitigen Kanal, zum Teil nach außen geleitet.

Die nach außen abströmende Luft wirkt sich dabei als Kühlstrom auf den Mantel des Brenners 5 aus. Darüberhinaus ist ein erheblicher Staueffekt der Flamme, auch bei stärker auftretenden Windböen unwahrscheinlich, wodurch das Erlöschen der Flamme vermeidbar ist während der Betriebsphase,

Die Befestigungsvorrichtung 8 besitzt an der Rückseite halbringförmig nach unten gebogene Ansätze (der Übersichtlichkeit halber nicht eingezeichnet). In deren Wirkungsbereich sind die Wellungen 3, mit dem inneren Ringständer 1, starr gehalten. Außerdem besitzt die Befestigungsvorrichtung 8 an den Endkanten Abstandhalter 9, mit denen sie in Ansenkungen am Brennstoffbehälterrand eingreift, und somit ist sie mittels der halbringförmigen Ansätze und mittels der Abstandhalter 9, praktisch am Brennstoffbehälter 7 und am inneren Ringständer 1 starr gekuppelt und daher mit diesen verdrehbar, wobei die Befestigungsvorrichtung 8 im beidseitig frei wählbaren Abstand und unter Bildung eines doppelkanäligen und zur Flammöffnung 11 der Befestigungsvorrichtung 8 führenden Luftspalts 10, zwischen dem Innenumfang des Brenners 5 und dem Außenumfang des Brennstoffbehälters 7, angeordnet ist,

Bei Verwendung von Festbrennstoffen werden die beweglichen Teile, durch verdrehen des Brenners 5 und/oder des inneren Ringständers 1, aus dem Brennerraum entfernt und der innere Ringständer 1 danach wieder ohne den Brennstoffbehälter 7 und ohne die Befestigungsvorrichtung 8, in den Brenner 5 eingesetzt. Anschließend werden dann auf den Brennstofflageflächen 2 Brennstofftabletten aufgelegt und nach Einstellen der Luftspaltbreite, angezündet,

Damit wird mit einfachsten Mitteln gegenüber den bisher bekannten Warmhaltevorrichtungen eine wesentlich bessere Leistung erreicht und in jedem Bereich eine kontrollierte, regulierbare Verbrennung erzielt.

Bezugszeichenliste

1.   innerer Ringständer
2.   Brennstofflageflächen
3.   Wellungen
4.   Auflaufstifte
5.   Brenner
6.   Auflaufstifte
7.   Brennstoffbehälter
8.   Befestigungsvorrichtung
9.   Abstandhalter
10.  Luftspalt
11.  Flammöffnung
12.  Luftleiterhöhungen
13.  Luftleitvertiefungen
14.  äußerer Ringständer

**Patentansprüche**

1. Konservenwärmegerät mit geringer Bauhöhe, welches im wesentlichen aus einem becherförmigen Brenner mit einer weitgehendst großräumig angelegten Flammöffnung und einem auf dessen Innenumfang angeordneten inneren Ringständer besteht, und einem mit eine eine mittige Flammöffnung aufweisenden und mit den Endkanten übergreifend auf einen Brennstoffbehälter angeordneten Befestigungsvorrichtung, bei dem die Befestigungsvorrichtung derart auf dem inneren Ringständer angeordnet ist, daß sie unter Bildung eines variablen Luftspalts, im Oberraum des Brenners zwischen dem Brennstoffbehälter und dem Brenner unverrückbar zentriert ist, wobei die Regelung der Luftzufuhr durch den im Unterraum des Brenners auf dessen Innenumfang angeordneten inneren Ringständers, entsprechend den Erfordernissen, regelbar ist, nach Patent .......... (Patentanmeldung P 39 42 530.3), **dadurch gekennzeichnet,** daß der im wesentlichen aus Streben und Ringen bestehende innere Ringständer (1), an den Streben mindestens zwei Brennstofflageflächen (2) aufweist und jeder Ring mit wenigstens drei Wellungen (3) am Innenumfang versehen ist und am Außenumfang der betreffenden Ringe, wenigstens drei symetrisch angeordnete und in wenigen Winkelgraden am Außenumfang ansteigende und jeweils aus zwei benachbarten Auflaufstiften (4) bestehende Auflaufschrägen vorhanden sind, und die Wellungen (3) an den einzelnen Ringen derart in Umfangrichtung des inneren Ringständers (1) versetzt sind, daß sie jeweils zwischen den benachbarten Auflaufstiften (4) angeordnet sind, wobei die Auflaufstifte (4), mit den am Innenumfang des Brenners (5) vorgeformten und prinzipiell den gleichen Aufbau aufweisenden Auflaufstiften (6), derart zusammenwirken, daß infolge einer Drehung der Brenner (5) und/oder innere Ringständer (1), im gewindegängigen Sinne gegeneinander verstellbar sind, womit die Luftzufuhr im Unterraum des Brenners (5) über dessen Endkanten erfolgt und über den Verstellweg der Auflaufschrägen den Auflaufstiften (4,6), entsprechend den Erfordernissen regelbar ist, und daß der Brennstoffbehälter (7) durch die Befestigungsvorrichtung (8) und infolgedessen mittels der halbkreisförmig an deren Außenumfang angeordneten und über die Wellungen (3) des inneren Ringständers (1) greifenden Ansätzen (nicht eingezeichnet), und mittels der an den Endkanten angeordneten und auf Ansenkungen im Bodenrand des Brennstoffbehälters (7) eingreifenden Abstandhaltern (9), unverrückbar und unverdrehbar um die eigene Achse, am inneren Ringständer (1) befestigt ist, und daß darüberhinaus die Befestigungsvorrichtung (8), im frei wählbaren Abstand und unter Bildung eines doppelkanäligen variablen Luftspalts (10), zwischen der Wandung des Brennstoffbehälters (7) und der des Brenners (6) angeordnet ist,

Konservenwärmegerät mit geringer Bauhöhe, nach Anspruch 1 dadurch gekennzeichnet, daß im Deckenabschnitt der Befestigungsvorrichtung (8) und im Deckenabschnitt des Brenners (5), jeweils wenigstens zwei aus dem Material nach oben gedrückte und jeweilig in symetrischer Reihenfolge einander abwechselnde Luftleiterhöhungen (12), bzw. benachbart angeordnete Luftleitvertiefungen (13) eingeformt sind,

Konservenwärmgerät mit geringer Bauhöhe, nach Anspruch 1 und 2 dadurch gekennzeichnet, daß am Außenumfang des Brenners (5) gegenüber dem inneren Ringständer (1), ein zweiter und prinzipiell den gleichen Aufbau aufweisender äußerer Ringständer (14) angeordnet ist,

## EINSCHLÄGIGE DOKUMENTE

EP 90125311.2

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | DE - A1 - 3 516 293<br>(MARSTELLER & KILLMANN)<br>* Gesamt *<br>-- | 1 | F 24 C 1/16<br>A 47 J 36/26 |
| A | DE - A1 - 3 402 760<br>(MARSTELLER & KILLMANN)<br>* Gesamt *<br>-- | 1 | |
| A | WO - A1 - 83/02 551<br>(HAUPTMANN)<br>-- | 1 | |
| D,A | DE - U - 7 317 609<br>(PEILL & PUTZLER, GLASHÜTTEN-<br>WERKE)<br>-- | | |
| D,A | DE - A1 - 2 936 595<br>(SPRING AG METALLWARENFABRIK<br>ESCHLIKON)<br>---- | | |

| RECHERCHIERTE SACHGEBIETE (Int Cl⁵) |
|---|
| A 47 J 27/00<br>A 47 J 36/00<br>F 24 C 1/00<br>F 24 C 3/00<br>F 24 C 5/00 |

Der vorliegende Recherchenbericht wurde für alle Patentansprüche erstellt.

| Recherchenort | Abschlußdatum der Recherche | Prüfer |
|---|---|---|
| WIEN | 04-07-1991 | TSCHÖLLITSCH |